# EUROPEAN PATENT APPLICATION

(11) **EP 2 378 076 A1**
(43) Date of publication of application: **19.10.2011**
(21) Application number: 11159162.4
(22) Date of filing: 22.03.2011
(51) Int. Cl.: F01D 5/20

(54) **Rotor blade and corresponding gas turbine engine**

(30) Priority: 19.04.2010 GB 1006451
(71) Applicant: Rolls-Royce plc, London SW1E 6AT (GB)
(72) Inventor: Diamond, Stephen, Derby, Derbyshire DE22 3UX (GB); Helvaci, Caner, Derby, Derbyshire DE73 5WW (GB); Townes, Roderick, Derby, Derbyshire DE22 2QB (GB)
(74) Representative: White, Kevin Andrew

(57) **Abstract**

A rotor blade 52 for a gas turbine engine has an aerofoil portion 38 and a tip region 40. The tip region 40 is at the radially outermost end of the blade 52. The radially outermost surface 54 carries abrasive material (not shown) to interact with an abradable surface. The tip 40 has a recess 60 in which cooling air outlets are formed. The recess 60 is open in a circumferential direction 64. This allows cooling air outlets 62 to be formed without interference from the abrasive material, and inhibits any tendency for abrasion debris to collect in the recess 60 and interfere with the flow of cooling air.

## Description

The present invention relates to rotor blades.

Rotor blades are used in gas turbine engines as turbine blades to interact with combustion gases to convert kinetic energy of the combustion gases into rotation of the rotor. Rotor blades are also used as compressor blades to provide compression of the gases, prior to combustion. The efficiency of the engine is affected by the manner in which the combustion gases flow around the rotor blades. One area of concern is to reduce losses associated with over-tip leakage, in which combustion gases pass around the radially outer end (tip) of the blade, between the tip of the blade and the fixed casing within which the blade is rotating.

Examples of the present invention provide a rotor blade having an aerofoil portion and a rotor tip at the radially outermost end of the blade, characterised in that the rotor tip comprises at least one winglet which projects transversely to shroud the tip, and in which a recess is formed, and the rotor tip further comprises cooling air outlets formed in the recess.

The recess may extend along an edge of the winglet. The recess may be open in a circumferential direction. The recess may be open toward the suction and/or the pressure side of the aerofoil portion.

The radially outermost surface of the tip may be associated, in use, with another surface to reduce leakage of combustion gases around the tip, one of the surfaces carrying abrasive material, and the other one of the surfaces being abradable.

The recess may be open at the radially outermost surface. The winglet may be stepped back from the outermost surface of the tip to form the recess. The winglet may be chamfered back from the outermost surface of the tip to form the recess. The winglet may be curved from the outermost surface of the tip to form the recess. The winglet may be undercut to form the recess.

The recess may extend continuously around the radially outermost surface of the tip. The radially outermost surface of the tip may be a surface of the winglet and the recess may extend around at least part of the outline of the winglet.

The rotor tip may include a gutter extending across the radially outermost surface of the tip, the or each recess being open to one or more of the gutter, the pressure side and the suction side.

Examples of the present invention also provide a gas turbine engine comprising at least one rotor blade as defined above.

Examples of the present invention will now be described in more detail, by way of example only, and with reference to the accompanying drawings, in which:
Figure 1 illustrates a section through a gas turbine engine;
Figure 2 is a general perspective view of a turbine blade for use as a rotor blade in the engine of Figure 1;
Figure 3 is a perspective view of the tip region of a first example embodiment of the invention, and Figure 4 is a section along the line 4-4 in Figure 3;
Figure 5 is a perspective view of the tip region of a first example embodiment of the invention, and Figure 6 is a section along the line 6-6 in Figure 5;
Figure 7 is a perspective view of the tip region of a first example embodiment of the invention, and Figure 8 is a section along the line 8-8 in Figure 7;
Figure 9 is a perspective view of the tip region of a first example embodiment of the invention, and Figure 10 is a section along the line 10-10 in Figure 9;
Figure 11 is a perspective view of the tip region of a first example embodiment of the invention; and
Figures 12 to 15 are sections generally corresponding with Figures 4, 6, 8 and 10, illustrating further example embodiments of the invention.

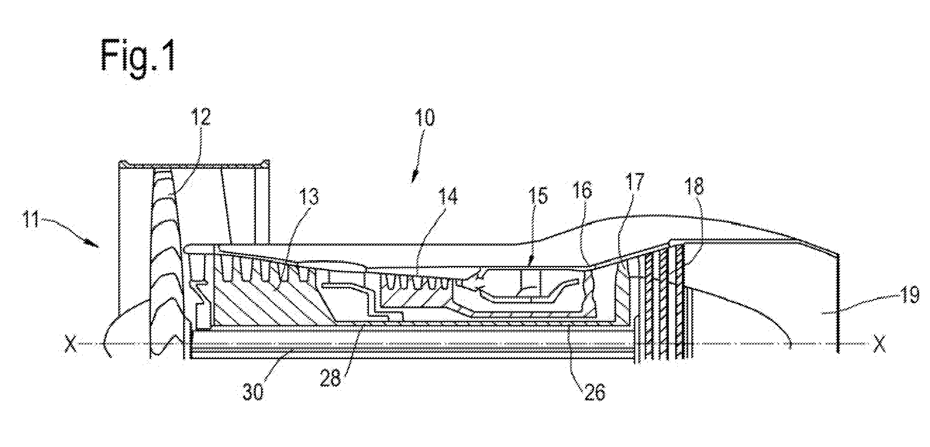

Referring to Figure 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts 26, 28, 30.

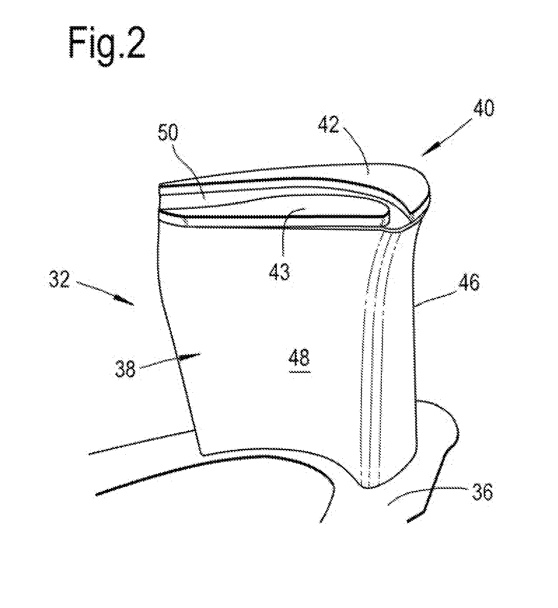

Figure 2 shows a rotor blade 32, in this case a turbine blade, such as those in the turbines 16, 17 and 18. The rotor blade 32 of Figure 2 is illustrated in order to describe various features which are common to each of the examples to be described below.

An aerofoil portion 38 of the rotor blade 32 extends generally radially away from the rotor 36. The aerofoil portion 38 extends to the tip region 40 of the blade 32. The aerofoil portion 38 interacts with passing combustion gases, during use, to drive the rotor 36 (in the case of a turbine blade), or to compress the combustion gases (in the case of a compressor blade).

The tip region 40 has features to reduce over-tip leakage losses associated with combustion gases passing around the tip of the blade 32. Two winglets 42, 43 project generally transversely from the tip of the aerofoil portion 38 to shroud the tip. The winglets 42, 43 project, respectively, from the suction face 46 and the pressure face 48 of the aerofoil portion 38.

A gutter 50 extends across the radially outer face of the tip 40. The presence of the gutter 50 assists in reducing over-tip leakage and associated losses.

Turning to the remaining drawings, examples of the present invention will now be described in more detail with reference to turbine blades. In each of these examples, reference numerals used above are used again in relation to those features which correspond with the features just described in relation to Figure 2. It is to be understood that the invention can also be applied to compressor blades.

### Example 1

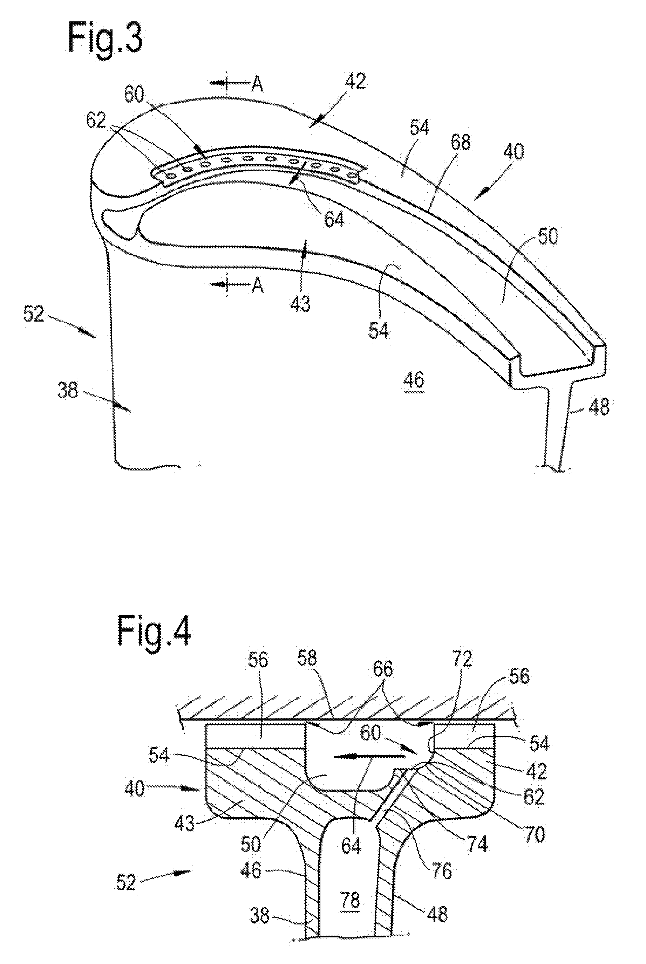

Figures 3 and 4 illustrate a first example. The blade 52 has an aerofoil portion 38, a tip region 40, and a gutter 50, as described above. The rotor tip region 40 is at the radially outermost end of the blade 52, and has a radially outermost surface 54. The radially outermost surface 54 of the tip 40 is associated, in use, with another surface 58 to reduce leakage of combustion gases around the tip 40. In this example, the radially outermost surface 54 carries abrasive material 56 (shown in Figure 4, but not in Figure 3, for reasons of clarity) and the surface 58 (Figure 4) is abradable, for reasons to be described. In an alternative arrangement, the abrasive and abradable properties may be reversed, with abrasive material being carried by the surface 58, and the radially outermost surface 54 being abradable. Other examples may omit the use of abrasive and abradable materials, leaving the blade uncoated at its tip.

The abradable surface 58 forms part of a stationary shroud and seal arrangement within which the rotor blade rotates. It is desirable to minimise the gap 66 between the abradable surface 58 and the tip region 40 in order to reduce leakage of combustion gases around the tip region 40, through the gap 66. However, tolerances on manufacture and assembly are expected to result in some variation of the width of the gap 66 at different positions around the rotor. The adverse effects of this can be mitigated by allowing the abrasive material 56 to cut into the abradable surface 58, thereby cutting a track which takes into account any manufacture or assembly tolerances to improve the sealing and reduce over-tip leakage. The abrasive and abradable surfaces may be reversed, as noted above.

The winglet 42 has a recess 60 in which cooling air outlets 62 are formed. The recess 60 is formed in the winglet 42. The recess 60 is open in a circumferential direction 64.

In this description, the term "circumferential direction" is used to refer to the direction (in either sense) in which rotor blades move as they turn around their operating axis and which is, at any point, generally perpendicular to the radial direction which extends out from the operating axis.

The recess 60 is open at the radially outermost surface 54. That is, the recess 60 is not covered when the tip region 40 is viewed along a radius toward the rotation axis of the blade 52. The recess 60 extends along an edge 68 (Figure 3) which, in this example, is an edge forming part of the outline of the winglet 42, along the gutter 50. The winglet 42 extends from the suction face 48. The winglet 42 is stepped back at 70 to form a generally rectilinear recess 60, having a wall 72 which is generally radial in direction, and a floor 74 which is generally circumferential. Accordingly, the recess 60 is also open to the gutter 50, in a circumferential direction 64.

The cooling air outlets 62 are formed in the floor 74. Consequently, the cooling air outlets 62 are formed in the winglet 42. The cooling air outlets 62 are supplied with cooling air through a passage 76 which is in communication with a void 78 within the aerofoil portion 38 of the blade 52.

### Example 2

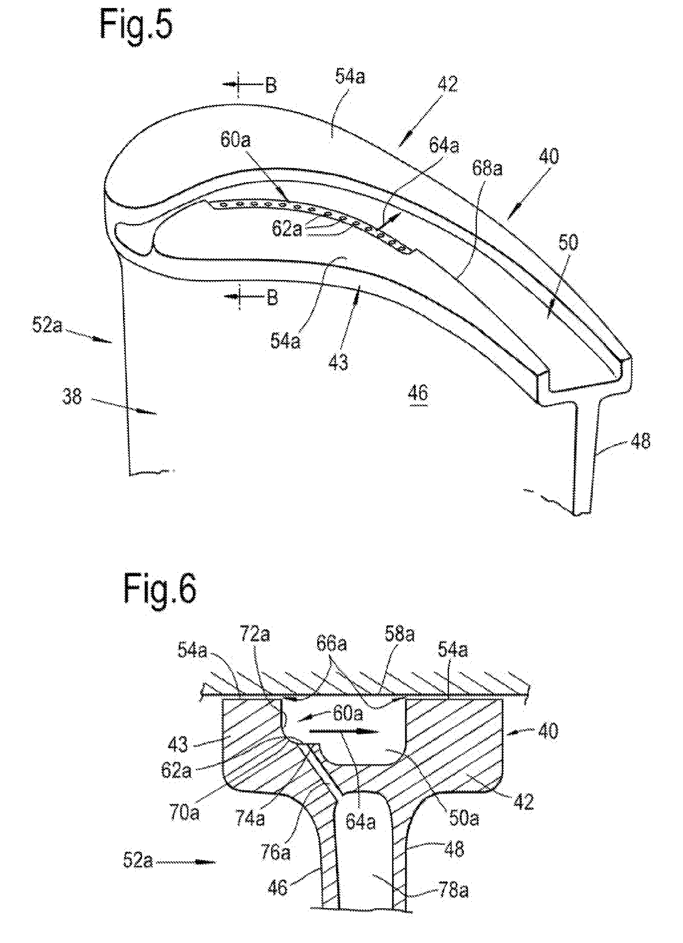

Figures 5 and 6 illustrate a second example. This rotor blade 52a has many features in common with, or equivalent to features described above in relation to Figures 3 and 4. In relation to those features, the same numerals are used again, with the suffix "a".

The principal difference between this example and the first example is the location of the recess 60a. The recess 60a is formed in the winglet 43. The recess 60a again extends along an edge 68a which, in this example, is an edge forming part of the outline of the winglet 43, along the gutter 50. The winglet 43 extends from the pressure face 46 of the aerofoil portion 38.

The winglet 43 is stepped back at 70a to form a generally rectilinear recess 60a, having a wall 72a which is generally radial in direction, and a floor 74a which is generally circumferential. Accordingly, the recess 60a is also open to the gutter 50a, in a circumferential direction 64a.

Cooling air outlets 62a are formed in the floor 74a. Consequently, the cooling air outlets 62a are formed in the winglet 43. The cooling air outlets 62a are supplied with cooling air through a passage 76a which is in communication with a void 78a within the aerofoil portion 38a of the blade 52a.

This example also differs from the first example, in that neither the radially outermost surface 54 nor the surface 58 is coated with abrasive material. Some sealing is achieved by the proximity of the surfaces 54, 58, but is not enhanced by abrasion between them.

### Examples 3 and 4

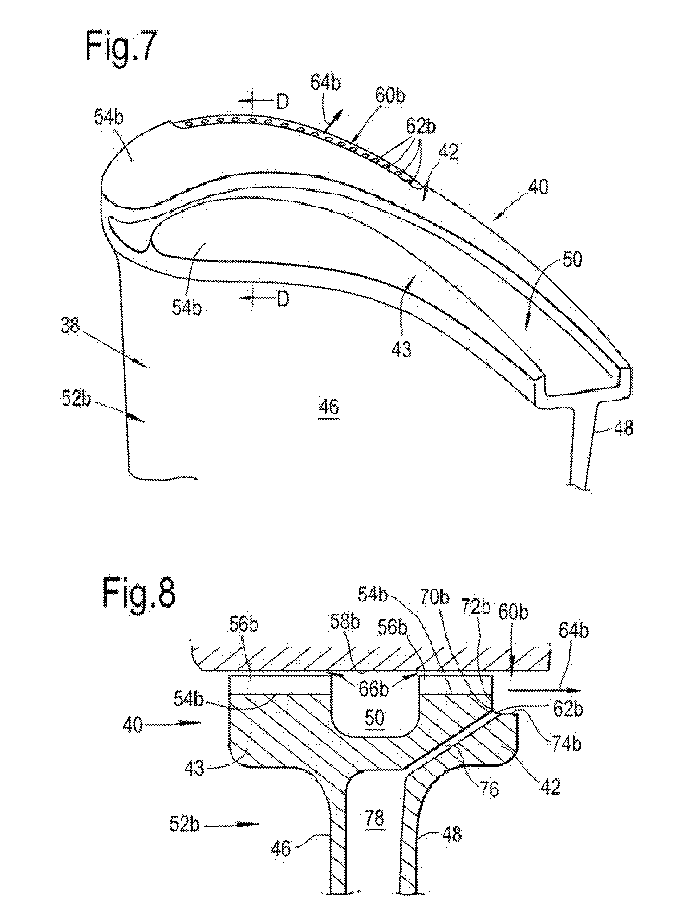

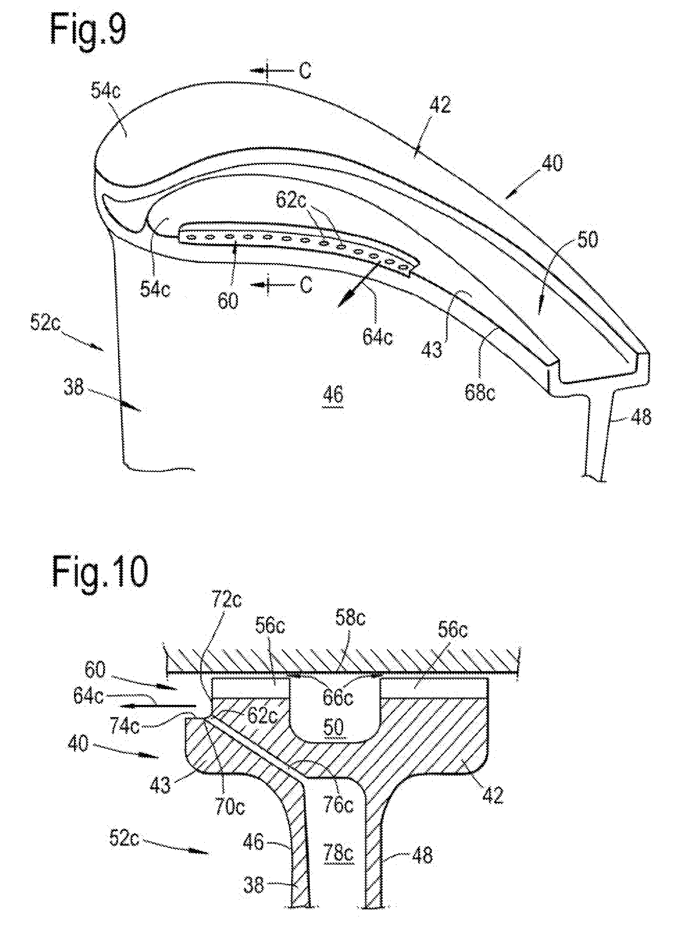

Figures 7 and 8 illustrate a third example. Figures 9 and 10 illustrate a fourth example. These examples can conveniently be described together. These rotor blades 52b,c again have many features in common with, or equivalent to features described above in relation to Figures 3 and 4. In relation to those features, the same numerals are used again, with the suffixes "b" and "c".

The principal difference between these examples and the previous examples is the location of the recesses 60b,c. The recesses 60b,c are formed in the winglets 42, 43. The recesses 60b,c again extend along edges 68b,c. In these examples, the recesses 60b,c are formed along the outer edges 68b,c of the winglets 42, 43, over the suction face 48 and pressure face 46, respectively.

In each of these examples, one of the winglets 42, 43 is stepped back at 70b,c to form a generally rectilinear recess 60b,c, having a wall 72b,c which is generally radial in direction, and a floor 74b,c which is generally circumferential. Accordingly, the recesses 60b,c are also each open in a circumferential direction 64b,c, respectively to the suction side and pressure side of the blade 52b,c.

Cooling air outlets 62b,c are formed in the floors 74b,c. Consequently, the cooling air outlets 62a are formed in the winglet 43. The cooling air outlets 62a are supplied with cooling air through passages 76b,c which are in communication with voids 78b,c within the aerofoil portions 38b,c of the blades 52b,c.

### Example 5

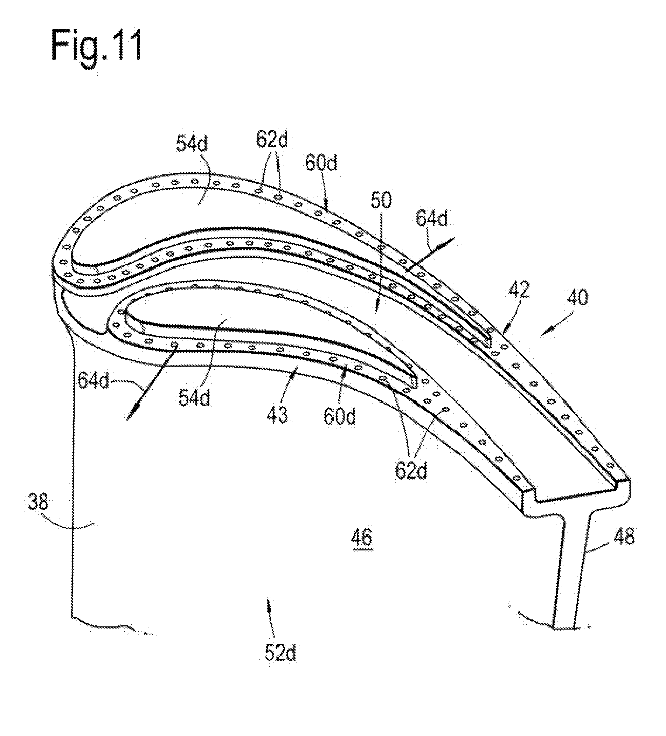

Figure 11 illustrates a fifth example. This rotor blade 52d has many features in common with, or equivalent to features described above in relation to Figures 3 and 4 and in relation to those features, the same numerals are used again, with the suffix "d".

The principal difference between this example and the first example is the provision of two recesses 60d, and the form of the recesses 60d. The recesses 60d are formed in the winglets 42, 43. The recesses 60d again extend along the outline of the winglets 42, 43. In this example, the recesses 60d extend continuously around the respective winglet 42, 43.

The winglets 42, 43 are stepped back in the manner described above, to form generally rectilinear recesses 60d. Accordingly, the recesses 60d are open in a circumferential direction, around the entire outline of the winglets 42, 43.

Cooling air outlets 62d are formed in the floors 74d. Consequently, the cooling air outlets 62a are formed in the winglet 43. The cooling air outlets 62a are supplied with cooling air through passages (not shown) which are in communication with a void within the aerofoil portion of the blade.

### Further Examples

In all of the examples described above, the recesses have been described as having a generally rectilinear form defined by a radial wall and a circumferential floor. Other geometries can be used. Several additional examples are illustrated in the remaining drawings. In each of these, the recesses are shown open to the gutter 50, but it will be readily apparent to the skilled reader that these geometries can be incorporated in any of the examples described above.

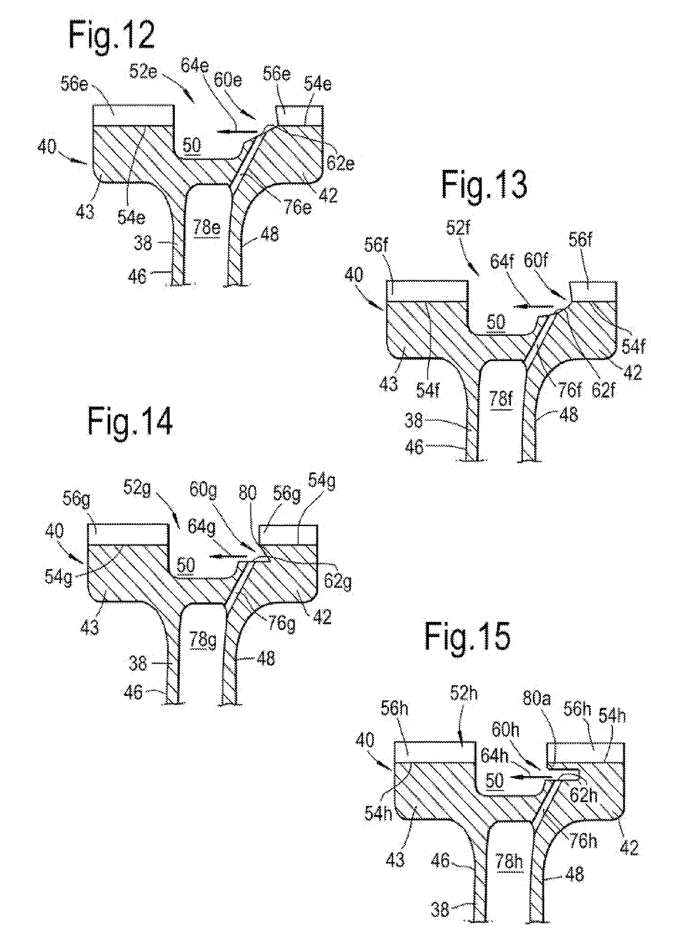

In Figure 12, the recess 60e is formed as a sloping chamfer along the edge of one of the winglets, and is open in a circumferential direction 64e.

In Figure 13, the recess 60f is defined by a curve formed along the edge of one of the winglets, and is open in a circumferential direction 64f.

In Figure 14 and Figure 15, the recess 60g,h is defined by an undercut. In Figure 14, the undercut is partial, so that part of the recess 60g is covered by a lip 80, and part is open in the radially outer direction. In Figure 15, a longer lip 80a fully covers the recess 60h in the radial direction. However, both recesses 60g, h are open to the gutter 50g, h in the circumferential direction 64g,h.

### Concluding Remarks

In each of these examples, the cooling air outlets are not formed in the radially outermost surface, but in the recess. In those examples which use abrasive and abradable material, debris from the abrasion process may enter the recesses during use, but is unlikely to be captured in the recess, because the recess is open for the debris to leave in a circumferential direction. In all of the examples, including those which do not use abrasive and abradable materials, any debris arising for other reasons is unlikely to be captured in the recess, for similar reasons. Consequently, we envisage that even when debris is being created by the abrasion process or arises for other reasons, the cooling flow from the cooling air outlets will not be choked or obstructed, so that the tip region 40 will be cooled as intended, and will not tend to overheat. In addition, initial formation of the cooling air outlets and associated passages is expected to be facilitated, for example by drilling after the abrasive material is in place, but without requiring the abrasive material to be drilled, which is likely to be very difficult. Alternatively, the cooling air outlets and associated passages can be formed before the abrasive material is in place, with reduced risk of the outlets being clogged by abrasive material, because the abrasive material is not required on the surfaces of the recess.

In each of these examples, the recess or recesses are described as formed in the winglet or winglets because they extend wholly or partly beyond the suction face or pressure face of the aerofoil portion, in a circumferential direction.

Recesses and cooling air outlets have been described at various positions in the various examples. These examples of recesses can be used in combination with each other, if desired. The sizes and relative sizes of the recesses, cooling air outlets and other features can be varied widely, according to design choices. In particular, design choices can be made in relation to the length of each recess along the corresponding edge, the radial depth of the recess, the extent of the recess in the circumferential direction, and in the size and number of cooling air outlets.

It will be understood by the skilled reader that many other geometries, sizes, shapes and materials could be used within the examples described above.

Examples of the present invention can be embodied in rotor blades for gas turbine engines, such as high-pressure turbine blades. The gas turbine engines can be used for aerospace, marine, or other propulsion purposes, or for static power generation purposes.

## Claims

1. A rotor blade (52) having an aerofoil portion (38) and a rotor tip (40) at the radially outermost end of the blade, the tip having a recess (60) in which cooling air outlets (62) are formed, and **characterised in that** the rotor tip (40) includes at least one winglet (42, 43) which projects transversely to shroud the tip, and in which the recess (60) is formed.

2. A rotor blade (52) according to claim 1, **characterised in that** the recess (60) extends along an edge (68) of the winglet (42, 43).

3. A rotor blade (52) according to claim 1 or 2, **characterised in that** the recess (60) is open in a circumferential direction (64).

4. A rotor blade (52) according to any preceding claim, **characterised in that** the recess (60) is open toward the suction and/or the pressure side (46, 48) of the aerofoil portion (38).

5. A rotor blade (52) according to any preceding claim, **characterised in that** the radially outermost surface (54) of the tip (40) is associated, in use, with another surface (58) to reduce leakage of combustion gases around the tip (40), one of the surfaces (54, 58) carrying abrasive material (56), and the other one of the surfaces (54, 58) being abradable.

6. A rotor blade (52) according to any preceding claim, **characterised in that** the recess (60) is open at the radially outermost surface (54) of the tip (40).

7. A rotor blade (52) according to any preceding claim, **characterised in that** the rotor tip (40) is stepped back from the outermost surface (54) of the tip (40) to form the recess (60).

8. A rotor blade (52) according to any preceding claim, **characterised in that** the rotor tip (40) is chamfered back from the outermost surface (54) of the tip (40) to form the recess (60).

9. A rotor blade (52) according to any preceding claim, **characterised in that** the rotor tip (40) is curved from the outermost surface (54) of the tip (40) to form the recess (60).

10. A rotor blade (52) according to any preceding claim, **characterised in that** the rotor tip (40) is undercut to form the recess (60).

11. A rotor blade (52) according to any preceding claim, **characterised in that** the recess (60) extends continuously around the radially outermost surface (54) of the tip (40).

12. A rotor blade (52) according to any preceding claim, **characterised in that** the radially outermost surface (54) of the tip (40) is a surface of the winglet.

13. A rotor blade (52) according to claim 12, **characterised in that** the recess (60) extends around at least part of the outline of the winglet.

14. A rotor blade (52) according to any preceding claim, **characterised in that** the rotor tip (40) has a gutter (50) extending across the radially outermost surface (54) of the tip, and the or each recess (60) is open to one or more of the gutter, the pressure side (46) and the suction side (48).

15. A gas turbine engine **characterised by** comprising at least one rotor blade according to any preceding claim.
